# EUROPEAN PATENT APPLICATION

(11) **EP 4 458 832 A1**
(43) Date of publication of application: **06.11.2024**
(21) Application number: 23461574.8
(22) Date of filing: 05.05.2023
(51) Int. Cl.: C07F 9/142, C07F 9/145

(54) **METHOD OF TRANSESTERIFICATION OF PHOSPHITES**

(71) Applicant: PCC ROKITA Spolka Akcyjna, 56-120 Brzeg Dolny (PL)
(72) Inventor: SWIST, Agnieszka, 54-212 Wroclaw (PL); DEMIANIUK, Adrianna, 55-100 Trzebnica (PL)
(74) Representative: Pietruszynska, Elzbieta

(57) **Abstract**

The invention relates to a method for phosphite transesterification in the presence of a fluoride alkaline catalyst using aliphatic alcohols, allowing for a transesterification product to be obtained with a platinum-cobalt colour in the range of 0 to 150, as determined by a visual method according to ASTM D1209-05(2019). Phosphites, obtained by the inventive method, are used in plastics processing as secondary stabilisers, ensuring high thermal and process stability of plastics, mainly those based on poly(vinyl chloride).

## Description

### Field of the invention

The invention relates to a method for phosphite transesterification in the presence of a fluoride alkaline catalyst using aliphatic alcohols. Phosphites, obtained by the inventive method, are used in plastics processing as secondary stabilisers, ensuring high thermal and process stability of plastics, mainly those based on poly(vinyl chloride).

### Prior Art

The processing of poly(vinyl chloride), one of the most commonly used plastics in various branches of industry, is relatively challenging. When exposed to temperature, radiation or oxidising conditions, poly(vinyl chloride) is prone to degradation, which results in discolouration, brittleness or fragility of the resulting material. As a result, additives of various types play a considerable role in PVC processing, which, in addition to imparting specific physical and chemical properties to the final product (plasticisers, anti-static agents, pigments, fillers, etc.), allow the process itself to be run smoothly by increasing the stability of the PVC (e.g. stabilisers/antioxidants).

Solid and liquid stabilisers are used in poly(vinyl chloride) processing. Liquid stabilisers contribute ease of handling in processing and structural compatibility with polymers. The most commonly used alkyl-aryl and trialkyl liquid stabilisers are isodecyl diphenyl phosphite, diisodecyl phenyl phosphite, triisodecyl phosphite and triisotridecyl phosphite. The demanding PVC processing process as well as the physical and chemical requirements for the final product defined the requirements for the stabilisers: a highly precise composition and physical and chemical parameters stable for at least 6 months, and a colour on the platinum-cobalt scale ranging from 0 to 150 (as determined by visual method according to ASTM D1209-05(2019)), i.e. from colourless to pale yellow.

A method is known for obtaining alkyl-aryl and trialkyl phosphites, as described in patent US3056824, consisting in the substitution with aliphatic groups of one or more aryl groups in triaryl phosphite in the presence of catalytic amounts of alkali metals or alkaline earth metals. A selected metal (usually sodium) was introduced into a mixture of triaryl phosphite (usually triphenyl phosphite) and a suitable mono- or polyhydroxy alcohol, which reacted with the alcohol in an anhydrous reaction medium to form sodium alcoholate. Where small amounts of water were present, sodium hydroxide was also formed, which, according to the patent authors, also functioned as a catalyst. It is highly challenging and, first and foremost, hazardous to carry out the process on a large scale using the method described, using highly reactive and highly corrosive metallic sodium, which enters into an exothermic reaction with alcohol and water, releasing hydrogen.

Then, the authors of patent US3056823, describe the possibility of substituting alkali metals or alkaline earth metals in the synthesis with the direct introduction of e.g. alcoholates, such as sodium methanolate, into the reaction medium. The use of this catalyst in the transesterification reaction of triaryl phosphite may lead to the formation of anisole, which contaminates the phenol that is removed from the reaction medium, as well as water, which may not only contaminate the phenol but also increase the acid number of the final product. Therefore, the authors of patent US5247118 describe sodium phenolate as a more efficient catalyst in the process of obtaining phosphonic acid esters with no detriment to the acid number of the product or the purity of the distilled phenol. Nevertheless, the use of sodium phenolate in the transesterification reaction may contribute to the appearance of a pinkish hue of the phosphite, which disqualifies the product on the market (the colour required on the platinum-cobalt scale is colourless to pale yellow).

Then, the authors of patent US3047608, describe dialkyl, haloalkyl, aryl and haloaryl phosphite as an efficient and neutral catalyst that does not adversely affect the colour of the final product or the process itself. For haloalkyl and haloaryl phosphite, the presence of halide atoms in the proposed catalysts prevents their use in products marketed as halogen-free. On the other hand, the use of diaryl phosphite, such as diphenyl phosphite, increases the total phenol content of the final product, particularly in trialkyl phosphites, where the total phenol content is a key parameter. Furthermore, the assumed purity of the alkyl-aryl and trialkyl phosphonic acid esters failed to be achieved when using dialkyl/diaryl phosphite in the transesterification reaction.

Patent EP0775147 describes a novel method for obtaining esters of oxyacids of pentavalent phosphorus atom by transesterification of a given ester with an alcohol in the presence of catalytic amounts of a base with a pKₐ of less than 11. Using bases with a pKa ranging from 2 to 11, and especially from 3 to 8 (for example, alkali metal fluorides such as potassium fluoride, rubidium fluoride, cesium fluoride, transition metal fluorides, carbonates such as potassium carbonate, cesium carbonate, ammonium carbonate, barium carbonate, strontium carbonate, or, for example, potassium acetate, zinc acetate, copper acetate, etc.), yielded all trialkyl, dialkylphenyl and alkyldiphenyl phosphates. According to EP0775147, other esters of the pentavalent phosphorus atom, such as phosphonates, phosphonites and thiophosphates, may be obtained using a similar method. Thus, the patent only applies to compounds of the pentavalent phosphorus atom. It contains, however, no reference whatsoever to compounds based on the trivalent phosphorus atom, including phosphites, nor does it suggest the possibility of using such catalysts in the synthesis of compounds based on the trivalent phosphorus atom.

Literature references that relate to processes for obtaining alkyl-aryl and trialkyl phosphites using the transesterification method, identify the limitations of available technologies when confronted with the requirements for phosphite stabilisers in large scale production. Moreover, increasingly stringent legal and environmental concerns force technology design to seek environmentally friendly solutions to minimise or prevent the generation of process by-product streams that constitute waste. Therefore, obtaining a contaminated phenol by-product stream classified as waste or requiring expensive purification processes necessary to allow for the phenol to be reused in syntheses is contrary to an environmentally friendly approach. Therefore, there is a need to provide an efficient and environmentally friendly technology for obtaining phosphite stabilisers, based on transesterification reactions that guarantee the required colour and purity of phosphonic acid esters and the stability of their physical and chemical parameters over time. Considering the usability of the transesterification products, it is desirable that they have a colour on the platinum-cobalt scale of less than 150, as determined by visual method according to ASTM D1209-05(2019). As shown by the experience of the authors of the present invention, it is problematic to obtain phosphites with a colour on the platinum-cobalt scale of less than 150, as determined by visual method according to ASTM D1209-05(2019), using prior art transesterification methods.

### Detailed description of the invention

The object of the present invention was to develop a transesterification method which will allow to obtain alkyl-aryl and trialkyl phosphites with a platinum-cobalt scale colour of less than 150, as determined by a visual method according to ASTM D1209-05(2019).

The inventors have surprisingly found that the technical problem of undesirable colouration of the transesterification products was overcome by using the method described below.

The invention relates to a method for transesterification of phosphites with the general formula (I):

P(OR¹)(OR²)(OR³) (I),

wherein substituent R¹ represents a phenyl group optionally substituted by 1 to 5 substituents independently selected from the group of substituents comprising C1-C9 alkyl substituents, substituents R² and R³ independently represent a phenyl group optionally substituted by 1 to 5 substituents independently selected from the group of substituents comprising C1-C9 alkyl substituents, or a linear or branched C8-C18 alkyl group,
using an alcohol with the general formula (II):

   R⁴OH (II),
wherein the R⁴ substituent represents a linear or branched C8-C18 alkyl group;
in the presence of an alkaline catalyst, wherein the transesterification product has a platinum-cobalt scale colour in the range of 0 to 150 as determined by visual method according to ASTM D1209-05(2019), characterised in that under anhydrous conditions and in an inert gas atmosphere, using an alkaline catalyst selected from the group comprising potassium fluoride, cesium fluoride and rubidium fluoride, the following steps are carried out:
   a) providing a phosphite with the general formula (I),
   b) providing an alcohol with the formula (II) and raising the temperature of the mixture to a range between 80°C and 180°C and reducing the pressure in the reaction vessel to a range between 5 and 120 mbar,
   c) gradually distilling off phenol with the formula R¹OH and optionally unreacted alcohol R⁴OH,
   d) raising the temperature of the mixture to a range between 180°C and 220°C and maintaining the pressure in the reaction vessel to a range between 5 mbar and 25 mbar while bubbling the inert gas through the reaction mixture,
   e) isolating the reaction product.

In a preferred embodiment, 0.5 to 5 moles of the alcohol with the general formula (II) are used per each mole of phosphite with the general formula (I); more preferably, 0.9 to 4 moles of the alcohol with the general formula (II) are used for each mole of phosphite with the general formula (I).

Preferably, when in the phosphite with the general formula (I) the substituents R¹, R² and R³ each represent a phenyl group that is optionally substituted by 1 to 5 substituents independently selected from the group of substituents comprising C1-C9 alkyl substituents, and per each mole of the phosphite with the general formula (I) 0.5 to 2.7 moles (in a more preferred embodiment, 0.9 to 2.7 moles) of the alcohol with the general formula (II) is used, step b) is carried out as follows:
b1.1) adding the alcohol with the formula (II),
b1.2) raising the temperature of the mixture to a temperature from 80°C to 150°C,
b1.3) reducing the pressure in the reaction vessel to a pressure in the range of 5 mbar to 25 mbar.

In another preferred embodiment of the inventive method, where:
in the phosphite with the general formula (I) substituents R¹, R² and R³ each represent a phenyl group which is optionally substituted by 1 to 5 substituents independently selected from the group of substituents comprising C1-C9 alkyl substituents, and per each mole of the phosphite with the general formula (I) 2.7 to 5 moles (in a more preferred embodiment, 2.7 to 4 moles) of the alcohol with the general formula (II) is used
   or
in the phosphite with the general formula (I) at least one of the substituents R² and R³ each represents a linear or branched C8-C18 alkyl group and per each mole of the phosphite with the general formula (I) between 0.5 and 2.7 moles (preferably between 0.9 and 2.7 moles) of the alcohol with the general formula (II) is used
then step b) is carried out as follows:
b2.1) raising the temperature of the mixture to a range between 80°C and 150°C and reducing the pressure in the reaction vessel to a range between 30 mbar and 120 mbar,
b2.2) adding the alcohol with the formula (II).

In the preferred inventive method, the phosphite with the general formula (I) is selected from the group comprising isodecyl diphenyl phosphite, phenyl diisodecyl phosphite and phosphites obtained by reacting phosphorus trichloride with phenol and an aliphatic alcohol having 8 to 18 carbon atoms or obtained by way of transesterification reaction of triaryl phosphite with an aliphatic alcohol having 8 to 18 carbon atoms, preferably from the group comprising isodecyl diphenyl phosphite and phenyl diisodecyl phosphite.

In another preferred inventive method, in the phosphite with the general formula (I), the substituents R² and R³ are the same and represent either a linear or a branched C8-C18 alkyl group, preferably the phosphite with the general formula (I) is a phenyl diisodecyl phosphite.

In the preferred inventive method, in the phosphite with the general formula (I) the substituents R¹, R² and R³ are identical and they represent a phenyl group which is optionally substituted by 1 to 5 substituents independently selected from the group of substituents comprising C1-C9 alkyl substituents, more preferably the phosphite with the general formula (I) is selected from the group comprising triphenyl phosphite, tricresyl phosphite, tris(tert-butylphenyl) phosphite, tris(tert-pentylphenyl) phosphite, tris(nonylphenyl) phosphite and a mixture of aryl phosphites obtained by reacting phosphorus trichloride with a mixture of phenol and alkylated phenol, most preferably the phosphite with the general formula (I) is selected from the group comprising triphenyl phosphite, tricresyl phosphite, tris(*tert*-butylphenyl) phosphite, tris(*tert-*pentylphenyl) phosphite, tris(nonylphenyl) phosphite, and particularly preferably the phosphite with the general formula (I) is triphenyl phosphite.

In another preferred method according to the invention, step d) involves raising the temperature of the mixture to a temperature between 190°C and 195°C.

In the preferred method according to the invention, step d) involves maintaining the pressure in the reaction vessel between 5 mbar and 15 mbar.

In another preferred method according to the invention, the alcohol with the general formula (II) is selected from the group comprising octanol, 2-ethylhexanol, nonanol, 1-decanol, isodecanol, 1-dodecanol, tridecanol, isotridecanol, tetradecanol, hexadecanol and stearyl alcohol, more preferably the alcohol with the general formula (II) is selected from the group comprising 1-decanol, isodecanol, 1-dodecanol, tridecanol and isotridecanol.

In the preferred method according to the invention, the transesterification product has a colour on the platinum-cobalt scale ranging from 0 to 50 as determined by visual method according to ASTM D1209-05(2019).

The phosphite with the general formula (I):

P(OR¹)(OR²)(OR³) (I),

being the raw material in the method according to the present invention may be a triaryl phosphite, in which the aryl group is a phenyl group or a phenyl group substituted with at least one alkyl group. The aryl phosphites that may be used in the inventive method also include phosphites composed of at least one aryl group (as defined above) and at least one alkyl group containing eight to eighteen carbon atoms, e.g. octyl, nonyl, decyl, dodecyl, tridecyl, tetradecyl, hexadecyl, octadecyl and isomers of the above groups. The alkyl substituent or substituents of the aryl group are selected from alkyl groups composed of one to nine carbon atoms, such as methyl, ethyl, propyl, butyl, pentyl, hexyl, nonyl and isomers of the aforementioned groups. Triaryl phosphite is made up of three identical aryl groups, two identical aryl groups and a third different one, or three different aryl groups. In the case where a phosphite contains two alkyl groups or two aryl groups, the multiplied groups may have the same or different structures (two different alkyl groups, two different aryl groups).

In the method as above, the aryl phosphite may be triphenyl phosphite, tricresyl phosphite, tris(2-tert-butyl-4-methylphenyl) phosphite, tris(tert-butylphenyl) phosphite, tris(tert-pentylphenyl) phosphite, tris(nonylphenyl) phosphite, a mixture of aryl phosphites obtained by reacting phosphorus trichloride with a mixture of phenol and alkylated phenol, as well as isodecyl diphenyl phosphite, diisodecyl phenyl phosphite, dipentyl phenyl phosphite, nonyl diphenyl phosphite, etc., which constitute the raw material for obtaining respective trialkyl phosphites, for example isodecyl diphenyl phosphite, diisodecyl phenyl phosphite constitute the raw material in the synthesis of a triisodecyl phosphite or a phosphite composed of one or two isodecyl groups and two aliphatic groups or one aliphatic group, respectively (e.g. dodecyl diisodecyl phosphite, dinonyl isodecyl phosphite, etc.).

The aliphatic alcohols with the formula (II) used in the inventive method contain eight to eighteen carbon atoms per molecule. The most commonly used alcohols in the method under consideration are octane-1-ol, 2-ethylhexane-1-ol, nonanol, decane-1-ol, isodecanol, dodecane-1-ol, tridecane-1-ol, isotridecanol, tetradecane-1-o!, hexadecane-1-ol, stearyl alcohol.

The inventive method uses an alkaline fluoride catalyst, which, to date, has not been used in the synthesis of phosphite using the transesterification method. According to the invention, transesterification of aryl phosphite with aliphatic alcohol occurs in the presence of catalytic amounts of alkali metal fluorides, preferably potassium fluoride, cesium and rubidium fluoride. An efficient process is ensured by using the catalyst in amounts from 0.005% to 1% relative to the number of moles of alcohol used. Preferably, between 0.01 and 0.5% catalyst is used in relation to the number of moles of alcohol used. Also, larger amounts of catalyst may be used in the process, but these may render the filtration of the product problematic. The catalyst may be added to the reactor at the start of the process or during the process. The use of alkali metal fluorides in the transesterification reaction also prevents the formation of water and anisole in the reaction medium, thus also preventing partial hydrolysis of the product and contamination of the phenolic by-product stream.

The transesterification reaction according to the invention is carried out at elevated temperatures: between 80 and 220°C, typically between 80 and 195°C, at pressures ranging from atmospheric to 5 mbar, until the required degree of aliphatic alcohol substitution of aryl phosphite is achieved. Increasing the temperature of the reaction may lead to the formation of a greater number and amount of by-products and a yellow colouration of the final product. The process is carried out in an inert gas atmosphere, usually nitrogen or argon, which reduces the number of by-products formed. The reaction is carried out under anhydrous conditions. Such conditions are ensured by using commercially available anhydrous raw materials and drying the reaction vessels using known methods.

Reagents may be mixed in different proportions depending on the selected degree of substitution. The molar ratio of the amount of alcohol to the starting amount of the ester is in the range of 0.5 : 1 to 5 : 1, preferably 0.9 : 1 to 4 : 1. Starting from the smallest alcohol molar ratio, alkyl-aryl esters are obtained, where primarily only one aryl group is substituted. Increasing the amount of alcohol used in the synthesis yields disubstituted and trisubstituted phosphonic acid esters. Phenol/alkylphenol, formed as a by-product during the transesterification reaction, and unreacted alcohol are removed from the reaction mixture by distillation. Whereas, the catalyst, or at least a significant part thereof, is removed by filtration.

The phenol distilled off during the reaction has a very high purity: ≥99.7%, which allows it to be used directly for the synthesis of triphenyl phosphite, with no additional purification processes being required.

Another raw material distilled during the transesterification reaction by the inventive method is a mixture of phenol/alkylphenol and alcohol. It may be used directly in the synthesis of a phosphite, based on a given alcohol, where the raw material is a phosphonic acid ester based on phenol or a suitable alkylphenol. For example, when using triphenyl phosphite as a raw material for transesterification reaction with isodecanol, a mixture consisting of 20 to 70% phenol and 30 to 80% isodecanol is distilled apart from the phenol. Such a mixture, containing phenol and isodecanol, may be used e.g. in the synthesis of triisodecyl phosphite, diisodecyl phenyl phosphite or isodecyl diphenyl phosphite with no detriment to the quality and properties of the product.

In the inventive method, the compounds distilled during the reaction are high-value raw materials that do not require additional purification processes, which makes them fully reusable in syntheses. The absence of waste by-products not only involves tangible financial benefits, but also removes the problem of disposing of by-products and thus their negative impact on the environment.

The inventive syntheses yield alkyl-aryl and trialkyl phosphites with the required composition as well as physical and chemical parameters stable for a minimum of 6 months, with a colour ranging from colourless to pale yellow (on the platinum-cobalt scale ranging from 0 to 150; ASTM D1209-05(2019), visual method). The phosphites obtained according to the invention are functional secondary process stabilisers, used primarily as additives for plastics. The phosphites under consideration prevent the degradation of polymeric materials during processing, thus providing thermal and process protection, while eliminating the effect of yellowish colouring of plastics.

The examples below are provided to add detail to the description of the present invention and should not be construed as limiting the scope of the invention. In the examples below, the colour has been determined by the visual method on the platinum-cobalt scale in accordance with ASTM D1209-05(2019).

### Example 1

### Isodecyl diphenyl phosphite

In a dried reactor equipped with a stirrer, temperature and pressure sensor, a system for uniform distribution of inert gas through the feedstock and a rectification column, triphenyl phosphite (200.0 g, 0.64 mol) is mixed with potassium fluoride (0.04 g, 0.7 mmol), followed by adding isodecyl alcohol (122.4 g, 0.77 mol). The mixture is heated and stirred at 90°C, followed by reducing the pressure to 10 mbar. During depressurisation, the phenol formed in the transesterification reaction is distilled. Once the system reaches a pressure of 10 mbar, the temperature is raised to 190 - 195°C, and the mixture is heated with an inert gas bubbling to remove residual phenol from the reaction mixture. Once a phenol content of <1.0% is achieved, the process is terminated by cooling, and the product is isolated by way of filtration. The reaction yields 236.0 g of liquid, colourless (10 on the platinum-cobalt scale) product with a yield of approximately 98% and distilled phenol with a purity of ≥99.7%.

### Example 2

### Diisodecyl phenyl phosphite

In a dried reactor equipped with a stirrer, temperature and pressure sensor, a system for uniform distribution of inert gas through the feedstock and a rectification column, triphenyl phosphite (200.0 g, 0.64 mol) is mixed with potassium fluoride (0.14 g, 2.4 mmol), followed by adding isodecyl alcohol (214.3 g, 1.35 mol). The mixture is heated and stirred at 105°C, followed by reducing the pressure to 10 mbar. During depressurisation, the phenol formed in the transesterification reaction is distilled. Once the system reaches a pressure of 10 mbar, the temperature is raised to 190 - 195°C, and the mixture is heated with an inert gas bubbling to remove residual phenol from the reaction mixture. Once a free phenol content of <1.0% is achieved, the process is terminated by cooling, and the product is isolated by way of filtration. The reaction yields 275.0 g of liquid, colourless (20 on the platinum-cobalt scale) product with a yield of approximately 97% and phenol with a purity of ≥99.7%.

### Example 3

### Triisodecyl phosphite

In a dried reactor equipped with a stirrer, temperature and pressure sensor, a system for uniform distribution of inert gas through the feedstock and a rectification column, triphenyl phosphite (200.0 g, 0.64 mol) is mixed with potassium fluoride (0.34 g, 5.8 mmol), followed by reducing the pressure to 50 mbar and the feedstock is heated to 120°C. When the preset temperature is reached, isodecanol is added to the reaction mixture (pure isodecanol and isodecanol recovered as a mixture with phenol from the synthesis of the previous batch, the total amount of isodecanol added: 326.5 g, 2.06 mol). The addition of alcohol produces phenol, a by-product of the transesterification reaction, which is distilled off from the reaction medium together with the phenol added to the reaction along with the isodecanol. Once all the alcohol has been added, the temperature is gradually increased to 190 - 195°C and the pressure is reduced to 10 mbar. After heating to 190°C, an inert gas purge is initiated through the feedstock to remove residual phenol and unreacted isodecanol from the reaction mixture. Once a phenol content of <0.1% is achieved, the process is terminated by cooling, and the product is isolated by way of filtration. The reaction yields 311.4 g of colourless liquid product (10 on the platinum-cobalt scale) with a reaction yield of approx. 96% and two by-products: phenol with a purity of ≥99.7% and a mixture of phenol and isodecanol.

### Example 4

### Triisodecyl phosphite

Isodecyl diphenyl phosphite (250.0 g, 0.67 mol) is placed in a dried reactor equipped with a stirrer, a temperature and pressure sensor, a system to distribute the inert gas evenly through the feedstock and a rectification column, the pressure is then reduced to 50 mbar, and the feedstock heated to 120°C. Once the preset temperature is reached, cesium fluoride (0.25 g, 1.64 mmol) is added into the reactor, followed by adding isodecyl alcohol (222.2 g, 1.40 mol) to the reaction mixture. The addition of alcohol produces phenol, a by-product of the transesterification reaction, which is distilled from the reaction medium. Once all the alcohol has been added, the temperature is gradually increased to 190 - 195°C and the pressure is reduced to 10 mbar. After heating to 190°C, an inert gas purge is initiated through the feedstock to remove residual phenol and unreacted isodecanol from the reaction mixture. Once a phenol content of <0.1% is achieved, the process is terminated by cooling, and the product is isolated by way of filtration. The reaction yields 320.0 g of colourless liquid product (20 on the platinum-cobalt scale) with a yield of approx. 95% and two by-products: phenol with a purity of ≥99.7% and a mixture of phenol and isodecanol.

### Example 5

### Triisodecyl phosphite

In a dried reactor equipped with a stirrer, temperature and pressure sensor, a system for uniform distribution of inert gas through the feedstock and a rectification column, phenyl diisodecyl phosphite (100.0 g, 0.23 mol) and rubidium fluoride (0.13 g, 1.24 mmol) are added, followed by reducing the pressure to 50 mbar and heating the feedstock to 120°C. Once the preset temperature is reached, pure isodecanol and isodecanol in the form of a mixture with phenol distilled from the previous batch are added to the reaction mixture (total amount of isodecanol added: 46.9 g, 0.3 mol). The addition of alcohol produces phenol, which is distilled from the reaction medium. Once all the alcohol has been added, the temperature is gradually increased to 190 - 195°C and the pressure is reduced to 10 mbar. After heating to 190°C, an inert gas purge is initiated through the feedstock to remove residual phenol and unreacted isodecanol from the reaction mixture. Once a phenol content of <0.1% is achieved, the process is terminated by cooling, and the product is isolated by way of filtration. The reaction yields 110.0 g of colourless liquid product (30 on the platinum-cobalt scale) with a yield of approx. 96% and two by-products: phenol with a purity of ≥99.7% and a mixture of phenol and alcohol.

### Comparative Example 6

### Triisodecyl phosphite

Isodecyl alcohol (306.1 g, 1.93 mol) and sodium phenolate (0.6 g, 5.2 mmol) are added into a dried reactor equipped with a stirrer, temperature and pressure sensor, a system for uniform distribution of inert gas through the feedstock and a rectification column, followed by reducing the pressure to 50 mbar and the feedstock is heated to 100°C. Once the preset temperature is reached, triphenyl phosphite (200.0 g, 0.64 mol) is added to the reaction mixture. The addition of phosphite produces phenol, which is distilled from the reaction medium. Once all the phosphite has been added, the temperature is gradually increased to 190 - 195°C and the pressure is reduced to 10 mbar. After heating to 190°C, an inert gas purge is initiated through the feedstock to remove residual phenol and unreacted isodecanol from the reaction mixture. Once a phenol content of <0.1% is achieved, the process is terminated by cooling, and the product is isolated by way of filtration. The reaction yields 301.5g of product with a yield of approximately 93% in the form of a pink-coloured liquid and two by-products, namely phenol with a purity of 97% and a mixture of phenol and isodecyl alcohol.

### Example 7

### Tridecyl phosphite

Proceeding as in Example 3, except that decyl alcohol (326.5 g, 2.06 mol) is used instead of isodecyl alcohol, yields 308.0 g of colourless (10 on the platinum-cobalt scale) liquid product with a yield of approximately 95%.

### Example 8

### Tridodecyl phosphite

Proceeding as in Example 3, using the following quantities of raw materials: 200.0 g (0.64 mol) of triphenyl phosphite, 0.54 g (9.3 mmol) of potassium fluoride and 393.9 g (2.11 mol) of dodecyl alcohol, yields 363.4 g of colourless (10 on the platinum-cobalt scale) liquid product with a reaction yield of approximately 96%.

### Example 9

### Triisotridecyl phosphite

In a dried reactor equipped with a stirrer, temperature and pressure sensor, a system for uniform distribution of inert gas through the feedstock and a rectification column, triphenyl phosphite (200.0 g, 0.64 mol) is mixed with potassium fluoride (0.14 g, 2.4 mmol), followed by reducing the pressure to 50 mbar and the feedstock is heated to 130°C. Once the preset temperature is reached, pure isotridecanol is added, as well as isotridecanol in the form of a mixture with phenol distilled from the synthesis of the previous batch (the total amount of isotridecanol added: 400.4 g, 2.0 mol). The addition of alcohol produces phenol, a by-product of the transesterification reaction, which is distilled off from the reaction medium together with the phenol added as a mixture with isotridecanol. Once all the alcohol has been added, the temperature is gradually increased to 190 - 195°C and the pressure is reduced to 10 mbar. After heating to 190°C, an inert gas purge is initiated through the feedstock to remove residual phenol and unreacted isotridecanol from the reaction mixture. Once a phenol content of <0.1% and an isotridecanol content of <2.0% is achieved, the process is terminated by cooling, and the product is isolated by way of filtration. The reaction yields 390.0 g of colourless liquid product (10 on the platinum-cobalt scale) with a yield of approx. 96% and two by-products: phenol with a purity of ≥99.7% and a mixture of phenol and isotridecanol.

### Example 10

### Tris(tridecyl) phosphite

Proceeding as in Example 9, except that tridecyl alcohol (402.0 g, 2.0 mol) is used instead of isotridecyl alcohol, yields 385.1 g of liquid colourless (20 on the platinum-cobalt scale) product with a yield of approximately 95%.

## Claims

1. A method for transesterification of phosphites with the general formula (I):
P(OR¹)(OR²)(OR³) (I),
wherein substituent R¹ represents a phenyl group optionally substituted by 1 to 5 substituents independently selected from the group of substituents comprising C1-C9 alkyl substituents, substituents R² and R³ independently represent a phenyl group optionally substituted by 1 to 5 substituents independently selected from the group of substituents comprising C1-C9 alkyl substituents, or a linear or branched C8-C18 alkyl group,
using an alcohol with the general formula (II):
R⁴OH (II),
wherein the R⁴ substituent represents a linear or branched C8-C18 alkyl group;
in the presence of an alkaline catalyst, wherein the transesterification product has a platinum-cobalt scale colour in the range of 0 to 150 as determined by visual method according to ASTM D1209-05(2019), **characterised in that** under anhydrous conditions and in an inert gas atmosphere, using an alkaline catalyst selected from the group comprising potassium fluoride, cesium fluoride and rubidium fluoride, the following steps are carried out:
a) providing a phosphite with the general formula (I),
b) providing an alcohol with the formula (II) and raising the temperature of the mixture to a range between 80°C and 180°C and reducing the pressure in the reaction vessel to a range between 5 and 120 mbar,
c) gradually distilling off a phenol with the formula R¹OH and optionally an unreacted alcohol R⁴OH,
d) raising the temperature of the mixture to a range between 180°C and 220°C and maintaining the pressure in the reaction vessel to a range between 5 mbar and 25 mbar while bubbling the inert gas through the reaction mixture,
e) isolating a reaction product.

2. The method according to claim 1, **characterised in that** per each mole of the phosphite with the general formula (I) from 0.5 to 5 moles of the alcohol with the general formula (II) are used.

3. The method according to claim 2, **characterised in that** when in the phosphite with the general formula (I) the substituents R¹, R² and R³ each represent a phenyl group that is optionally substituted by 1 to 5 substituents independently selected from the group of substituents comprising C1-C9 alkyl substituents, and per each mole of the phosphite with the general formula (I) from 0.5 to 2.7 moles of the alcohol with the general formula (II) is used, step b) is carried out as follows:
b1.1) adding the alcohol with the formula (II),
b1.2) raising the temperature of the mixture to a temperature from 80°C to 150°C,
b1.3) reducing the pressure in the reaction vessel to a pressure in the range of 5 mbar to 25 mbar.

4. The method according to claim 2, **characterised in that** per each mole of the phosphite with the general formula (I) 0.9 to 4 moles of the alcohol with the general formula (II) are used.

5. The method according to claim 4, **characterised in that,** when in the phosphite with the general formula (I) the substituents R¹, R² and R³ each represent a phenyl group that is optionally substituted by 1 to 5 substituents independently selected from the group of substituents comprising C1-C9 alkyl substituents, and per each mole of the phosphite with the general formula (I) 0.9 to 2.7 moles of the alcohol with the general formula (II) is used, step b) is carried out as follows:
b1.1) adding the alcohol with the formula (II),
b1.2) raising the temperature of the mixture to a temperature from 80°C to 150°C,
b1.3) reducing the pressure in the reaction vessel to a pressure in the range of 5 mbar to 25 mbar.

6. The method according to claim 2, **characterised in that** when:
in the phosphite with the general formula (I) substituents R¹, R² and R³ each represent a phenyl group which is optionally substituted by 1 to 5 substituents independently selected from the group of substituents comprising C1-C9 alkyl substituents, and per each mole of the phosphite with the general formula (I) 2.7 to 5 moles of the alcohol with the general formula (II) are used
or
in the phosphite with the general formula (I) at least one of the substituents R² and R³ each represents a linear or branched C8-C18 alkyl group and per each mole of the phosphite with the general formula (I) between 0.5 and 2.7 moles of the alcohol with the general formula (II) is used
then step b) is carried out as follows:
b2.1) raising the temperature of the mixture to a range between 80°C and 150°C and reducing the pressure in the reaction vessel to a range between 30 mbar and 120 mbar,
b2.2) adding the alcohol with the formula (II).

7. The method according to claim 4, **characterised in that,** when:
in the phosphite with the general formula (I) substituents R¹, R² and R³ each represent a phenyl group which is optionally substituted by 1 to 5 substituents independently selected from the group of substituents comprising C1-C9 alkyl substituents, and per each mole of the phosphite with the general formula (I) 2.7 to 4 moles of the alcohol with the general formula (II) is used
or
in the phosphite with the general formula (I) at least one of the substituents R² and R³ each represents a linear or branched C8-C18 alkyl group and per each mole of the phosphite with the general formula (I) between 0.9 and 2.7 moles of the alcohol with the general formula (II) is used
then step b) is carried out as follows:
b2.1) raising the temperature of the mixture to a range between 80°C and 150°C and reducing the pressure in the reaction vessel to a range between 30 mbar and 120 mbar,
b2.2) adding the alcohol with the formula (II).

8. The method according to any one of claims 1, 2, 6 or 7, **characterised in that** the phosphite with the general formula (I) is selected from the group comprising isodecyl diphenyl phosphite, diisodecyl phenyl phosphite and phosphites obtained by reacting phosphorus trichloride with phenol and an aliphatic alcohol having 8 to 18 carbon atoms or obtained by way of transesterification reaction of triaryl phosphite with an aliphatic alcohol having 8 to 18 carbon atoms, preferably from the group comprising isodecyl diphenyl phosphite and phenyl diisodecyl phosphite.

9. The method according any one of claims 1, 2, 6 or 7, **characterised in that** in the phosphite with the general formula (I) the substituents R² and R³ are identical and they represent either a linear or a branched C8-C18 alkyl group, preferably the phosphite with the general formula (I) is a phenyl diisodecyl phosphite.

10. The method according any one of claims 1 to 5, **characterised in that** in the phosphite with the general formula (I) the substituents R¹, R² and R³ are identical and they represent a phenyl group that is optionally substituted by 1 to 5 substituents independently selected from the group of substituents comprising C1-C9 alkyl substituents.

11. The method according to claim 10, **characterised in that** the phosphite with the general formula (I) is selected from the group comprising triphenyl phosphite, tricresyl phosphite, tris(*tert*-butylphenyl) phosphite, tris(*tert*-pentylphenyl) phosphite, tris(nonylphenyl) phosphite and a mixture of aryl phosphites obtained by reacting phosphorus trichloride with a mixture of phenol and an alkylated phenol, still more preferably the phosphite with the general formula (I) is selected from the group comprising triphenyl phosphite, tricresyl phosphite, tris(*tert*-butylphenyl) phosphite, tris(tert-pentylphenyl) phosphite, tris(nonylphenyl) phosphite, and most preferably the phosphite with the general formula (I) is triphenyl phosphite.

12. The method according to any one of the preceding claims, **characterised in that** step d) involves raising the temperature of the mixture to the temperature in the range of 190°C to 195°C.

13. The method according to any one of the preceding claims, **characterised in that** step d) involves maintaining the pressure in the reaction vessel between 5 mbar and 15 mbar.

14. The method according to any one of the preceding claims, **characterised in that** the alcohol with the general formula (II) is selected from the group comprising octanol, 2-ethylhexanol, nonanol, 1-decanol, isodecanol, 1-dodecanol, tridecanol, isotridecanol, tetradecanol, hexadecanol and stearyl alcohol, preferably the alcohol with the general formula (II) is selected from the group comprising 1-decanol, isodecanol, 1-dodecanol, tridecanol and isotridecanol.

15. The method according to any one of the preceding claims, **characterised in that** the transesterification product has a colour on the platinum-cobalt scale ranging from 0 to 100, preferably the transesterification product has a colour on the platinum-cobalt scale ranging from 0 to 50.
